# EUROPEAN PATENT APPLICATION

(11) **EP 4 546 548 A1**
(43) Date of publication of application: **30.04.2025**
(21) Application number: 23825789.3
(22) Date of filing: 17.02.2023
(51) Int. Cl.: H01M 50/503, H01M 50/209, H01M 10/613

(54) **BATTERY PACK**

(30) Priority: 22.06.2022 CN 202221579454 U
(71) Applicant: BYD Company Limited, Shenzhen, Guangdong 518118 (CN)
(72) Inventor: SHU, Yuanmao, Shenzhen, Guangdong 518118 (CN); WANG, Xiao, Shenzhen, Guangdong 518118 (CN); YOU, Yueqiu, Shenzhen, Guangdong 518118 (CN); ZHENG, Weixin, Shenzhen, Guangdong 518118 (CN); LU, Zhipei, Shenzhen, Guangdong 518118 (CN)
(74) Representative: Mathys & Squire
(86) International application number: PCT/CN2023/076842
(87) International publication number: WO 2023/246130

(57) **Abstract**

Provided in the present disclosure is a battery pack, comprising: a plurality of battery cells, each of which comprises a shell, a battery core, and a plurality of terminal posts, wherein an accommodating space is defined inside the shell, the cell is arranged in the accommodating space, the shell is at least provided with a first surface and a second surface, and the terminal posts are arranged on the cell and extend out of the shell from the first surface; an electrical connecting member, which is arranged opposite each of two adjacent first surfaces and is electrically connected to each of two adjacent terminal posts, so as to conduct two adjacent battery cells; and a heat transfer member, which can transfer heat from the electrical connecting member to the second surface.

## Description

### CROSS-REFERENCE TO RELATED APPLICATION

The present disclosure claims priority to and benefits of Chinese Patent Application No. 2022215794545, filed on June 22, 2022, titled "BATTERY PACK". The entire content of the above-referenced application is incorporated herein by reference.

### FIELD

The present disclosure relates to the technical field of heat dissipation of a battery pack, and more specifically, to a battery pack.

### BACKGROUND

A battery pack is typically composed of multiple battery cells having a battery core and multiple terminal posts. The corresponding terminal posts of the battery cells are connected by an electrical connecting member. A conventional electrical connecting member is typically a connecting sheet welded directly to the terminal post. During charging and discharging of the battery pack, heat released from the terminal post is transferred to the connecting sheet. The connecting sheet can have the heat dissipated solely by itself. As such, when the connecting sheet bears an excessively high current, the temperature of the connecting sheet tends to increase drastically, and heat dissipation by the connecting sheet itself cannot satisfy the demand, thereby resulting in an excessively elevated temperature of the connecting sheet, which has an adverse impact on the battery core.

### SUMMARY

The present disclosure provides a novel technical solution for a battery pack that can at least solve the problem of heat dissipation for the electrical connecting member in related art.

The present disclosure provides a battery pack which includes: multiple battery cells, each of which includes a shell, a battery core, and multiple terminal posts, where an accommodating space is defined inside the shell, the battery core is arranged in the accommodating space, the shell is at least provided with a first surface and a second surface, and the terminal posts are arranged on the battery core and extend out of the shell from the first surface; an electrical connecting member, which is arranged opposite to each of two adjacent first surfaces and is electrically connected to each of two adjacent terminal posts, so as to conduct two adjacent battery cells; and a heat transfer member, which can transfer the heat from the electrical connecting member to the second surface.

Optionally, the electrical connecting member includes: a first connecting piece, an orthogonal projection of which on the first surface covers the terminal posts; and a second connecting piece, which is arranged on an outer side of the first connecting piece, where an orthogonal projection of the second connecting piece on the first surface is spaced apart from the terminal posts and the second connecting piece is in thermally conductive connection with the heat transfer member.

Optionally, the electrical connecting member is a sheet-shaped body.

Optionally, the battery pack further includes: a mounting seat, which is arranged on a side of the second connecting piece away from the terminal posts to define a position of at least a part of the heat transfer member relative to the electrical connecting member, where the mounting seat is in thermally conductive connection with each of the second connecting piece and at least the part of the heat transfer member.

Optionally, two second connecting pieces are provided and are located respectively on two sides of the first connecting piece, and two mounting seats are provided and are respectively in one-to-one correspondence with the two second connecting pieces.

Optionally, a clamping slot is provided on a side of the mounting seat away from the terminal posts to mount at least a part of the heat transfer member.

Optionally, the heat transfer member includes: a radiator, at least a part of which is arranged opposite to the electrical connecting member and configured to exchange heat with the electrical connecting member, where the radiator has a first cooling channel; and a cooler, at least a part of which is in thermally conductive connection with the second surface, where the cooler has a second cooling channel which is in communication with the first cooling channel to transfer heat from the electrical connecting member to the second surface.

Optionally, the radiator includes multiple straight pipes and an elbow pipe arranged at an end portion of the straight pipes to connect the adjacent straight pipes.

Optionally, the shell has edges extending along a first direction, a second direction, and a third direction. The first direction and the second direction define a first plane, the first direction and the third direction define a second plane, and the second direction and the third direction define a third plane. The first surface is connected to the second surface, the first surface is parallel to the third plane, and the second surface is parallel to the second plane.

Optionally, the surface area of the second surface is greater than that of the first surface.

The battery pack according to the present disclosure is essentially composed of multiple battery cells, an electrical connecting member, and a heat transfer member. The electrical connecting member can conduct adjacent battery cells and is opposite to the first surface. The heat transfer member can transfer heat from the electrical connecting member to the vicinity of the second surface. The electrical connecting member is provided to electrically connect two adjacent terminal posts extending out of the first surface, and the heat transfer member transfers heat from the electrical connecting member to the second surface. In this way, the heat transfer member leads out heat at the electrical connecting member, so that an excessively high temperature of the terminal posts and the electrical connecting member can be effectively prevented, which is favorable for achieving quick charging.

Other features and advantages of the present disclosure will become apparent from the following detailed description of exemplary embodiments of the present disclosure with reference to the drawings.

### BRIEF DESCRIPTION OF THE DRAWINGS

The foregoing and/or additional aspects and advantages of the present disclosure will become apparent and comprehensible from the following description of the embodiments with reference to the drawings, where:
FIG. 1 shows a perspective view of a part of the structure of a battery pack according to an embodiment provided by the present disclosure;
FIG. 2 shows an exploded view of a part of the structure of a battery pack according to an embodiment provided by the present disclosure;
FIG. 3 shows a right side view of a part of the structure of a battery pack according to an embodiment provided by the present disclosure; and
FIG. 4 shows a front view of a part of the structure of a battery pack according to an embodiment provided by the present disclosure.

In the drawings:
10 battery cell; 11 shell; 111 first surface; 112 second surface; 12 terminal post;
20 electrical connecting member; 21 first connecting piece; 22 second connecting piece;
31 radiator; 311 straight pipe; 312 elbow pipe;
40 mounting seat; 41 clamping slot.

### DETAILED DESCRIPTION

The embodiments of the present disclosure are described below in detail. Examples of the embodiments are shown in the drawings, and same or similar reference numerals throughout the drawings denote same or similar elements or elements having same or similar functions. The embodiments described below with reference to the drawings are exemplary, and are merely intended to explain the present disclosure and shall not be construed as limitation of the present disclosure.

A battery pack according to an embodiment of the present disclosure is described in detail below with reference to the drawings.

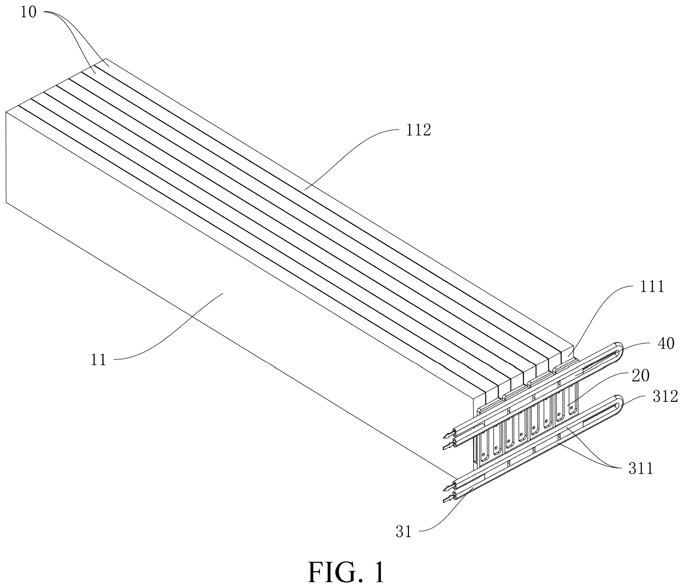

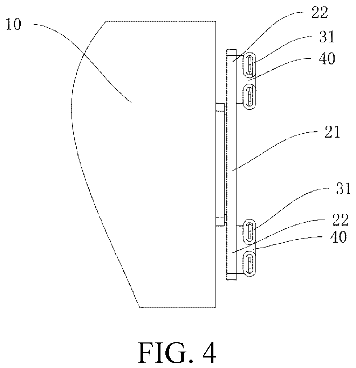

As shown in FIGS. 1 to 4, the battery pack according to an embodiment of the present disclosure includes multiple battery cells 10, an electrical connecting member 20, and a heat transfer member.

Specifically, each of the battery cells 10 includes a shell 11, a battery core, and multiple terminal posts 12. An accommodating space is defined inside the shell 11. The battery core is arranged in the accommodating space. The shell 11 has at least a first surface 111 and a second surface 112. The terminal posts 12 are arranged on the battery core and extend out of the shell 11 from the first surface 111. The electrical connecting member 20 is arranged opposite to each of the two adjacent first surfaces 111 and is electrically connected to each of the two adjacent terminal posts 12 to conduct the two adjacent battery cells 10. The heat transfer member can transfer heat from the electrical connecting member 20 to the second surface 112.

In other words, the battery pack according to the embodiment of the present disclosure is essentially composed of multiple battery cells 10, an electrical connecting member 20, and a heat transfer member. The electrical connecting member 20 can electrically connect the terminal posts 12 of adjacent battery cells 10. The heat transfer member can transfer heat from the electrical connecting member 20 opposite to the first surface 111 to the vicinity of the second surface 112.

The battery cell 10 includes a shell 11, a battery core, and multiple terminal posts 12. A single battery core or multiple battery cores may be provided. The multiple terminal posts 12 may be divided into terminal post groups. Each terminal post group includes one positive-electrode terminal post and one negative-electrode terminal post. One battery core may correspond to at least one terminal post group. For example, when a battery cell 10 includes one battery core, the battery cell 10 may include two terminal posts 12, a positive-electrode terminal post and a negative-electrode terminal post. When a battery cell 10 includes N battery cores, the battery cell 10 may include N positive-electrode terminal posts and N negative-electrode terminal posts. The positive-electrode terminal post and the negative-electrode terminal post in a terminal post group may be located on the same side or different sides of the battery core, which is not limited here. In addition, an accommodating space is defined inside the shell 11 to accommodate the battery core.

The shell 11 has at least a first surface 111 and a second surface 112. The first surface 111 and the second surface 112 are not in the same plane. The terminal posts 12 are arranged in the corresponding battery core and extend out of the shell 11 from the first surface 111. Specifically, each of the terminal posts 12 of each battery cell 10 extends out of the shell 11 from the first surface 111. It is to be noted that the terminal posts 12 in a terminal post group may extend from the same first surface 111 or different first surfaces 111. For example, the positive-electrode terminal post extends from a first surface 111 and the negative-electrode terminal post extends from another first surface. Alternatively, the positive-electrode terminal post and the negative-electrode terminal post both extend from the same first surface 111. The terminal posts corresponding to multiple terminal post groups also may extend from the same first surface 111 or different first surfaces 111, which is not described in detail here. That is, these configurations shall all fall within the protection scope of the present disclosure, provided that the terminal post 12 extends from the first surface 111.

The battery core may be a rechargeable secondary battery core. Specifically, the battery core may be a lithium iron phosphate battery core, a ternary lithium battery core, or the like, or a combination thereof, which is not limited here.

In addition, an electrical connecting member 20 is arrange opposite to each of the two adjacent first surfaces 111 and is electrically connected to each of the two adj acent terminal posts 12. For example, the inner side face of the electrical connecting member 20 is arranged opposite to each of the first surfaces 111 of the two adjacent battery cells 10 and is electrically connected to each of the two adjacent terminal posts 12 on the two battery cells 10 to conduct the two adjacent battery cells 10. The number of the electrical connecting members 20 may be set depending on the number and arrangement of the battery cells 10 in the battery pack so that the battery cells 10 in the battery pack are each conducted by the electrical connecting members 20. For example, the multiple battery cells 10 are arranged in sequence as a first battery cell, a second battery cell, a third battery cell,......, and an N-th battery cell. The first battery cell and the second battery cell may share an electrical connecting member 20, the third battery cell and the fourth battery cell may share another electrical connecting member 20, and so forth, until the battery cells 10 in the battery pack are each conducted by the electrical connecting members 20.

It is to be noted that when the electrical connecting member 20 electrically connects the adjacent terminal posts 12, heat at the terminal posts 12 also can be transferred to the electrical connecting member 20. The heat transfer member can transfer the heat from the electrical connecting member 20 to the vicinity of the second surface 112 for heat dissipation. That is, by providing the heat transfer member in the vicinity of the first surface 111, heat can be transferred from the electrical connecting member 20 and the terminal posts 12 extending out of the first surface 111 to the vicinity of the second surface 112 for heat dissipation.

As such, the battery pack according to the present disclosure is essentially composed of multiple battery cells 10, an electrical connecting member 20, and a heat transfer member. The electrical connecting member 20 can conduct the adjacent battery cells 10 and is arranged opposite to the first surface 111. The heat transfer member can transfer heat from the electrical connecting member 20 to the vicinity of the second surface 112. The electrical connecting member 20 is provided to electrically connect two adj acent terminal posts 12 extending out of the first surface 111, and the heat transfer member transfers heat from the electrical connecting member 20 and the terminal posts 12 to the vicinity of the second surface 112. In this way, the heat transfer member can transfer heat to lead out heat from the vicinity of the electrical connecting member 20 and the terminal posts 12 for heat dissipation through the vicinity of the second surface 112, so that an excessively high temperature of the terminal posts 12 and the electrical connecting member 20 can be effectively prevented, which is favorable for achieving quick charging.

According to an embodiment of the present disclosure, the electrical connecting member 20 includes a first connecting piece 21 and a second connecting piece 22. An orthogonal projection of the first connecting piece 21 on the first surface 111 covers the terminal posts 12. The second connecting piece 22 is arranged on the outer side of the first connecting piece 21. An orthogonal projection of the second connecting piece 22 on the first surface 111 is spaced apart from the terminal posts 12. The second connecting piece 22 is in thermally conductive connection with the heat transfer member.

Specifically, the electrical connecting member 20 is essentially composed of the first connecting piece 21 and the second connecting piece 22. The first connecting piece 21 and the second connecting piece 22 may adopt an integrally formed structure, which facilitates processing and reduces the production cost. As the orthogonal projection of the first connecting piece 21 on the first surface 111 covers the terminal posts 12, the first connecting piece 21 may be provided with a connecting structure for connection with the terminal posts 12. That is, the terminal posts 12 can be electrically connected to the first connecting piece 21. The connection between the first connecting piece 21 and the terminal posts 12 may be made through welding or by other means, provided that effective heat transfer can be achieved in the case of conduction between the first connecting piece 21 and the terminal posts 12.

In addition, the second connecting piece 22 may extend from an end portion of the first connecting piece 21 to the outer side of the first connecting piece 21. The orthogonal projection of the second connecting piece 22 on the first surface 111 is spaced apart from the terminal posts 12. That is, the second connecting piece 22 may be in indirect contact with the terminal posts 12. The heat transfer member is in thermally conductive connection with the second connecting piece 22. Through the design of the second connecting piece 22 spaced apart from the terminal posts 12, a structure for electrical connection with the terminal posts 12 can be designed on a side of the electrical connecting member 20 away from the first surface 111.

The specific process of heat transfer from the terminal posts 12 may be as follows. Heat is first transferred from the terminal posts 12 to the first connecting piece 21 and then transferred from the first connecting piece 21 to the second connecting piece 22. Thereafter, the heat transfer member transfers heat from the second connecting piece 22 to the vicinity of the second surface 112 for heat dissipation, thereby improving the heat dissipation efficiency for the terminal posts 12 and preventing adverse impact on the battery core.

It is to be noted that heat is not only dissipated from the second surface 112, but also dissipated continuously during heat transfer through the terminal posts 12, the electrical connecting member 20, and the heat transfer member.

According to an embodiment of the present disclosure, the electrical connecting member 20 is a sheet-shaped body. That is, the electrical connecting member 20 may be an electrical connecting sheet of a sheet-shaped structure, i.e., the electrical connecting sheet may have a first side face and a second side face. The first side face may face the first surface 111 and the second side face may face away from the second surface 112. Optionally, the electrical connecting sheet may be a rectangular metal connecting sheet, and the four corners of the rectangular metal connecting sheet may be rounded corners.

When the electrical connecting member 20 is a sheet-shaped body, the electrical connecting member 20 may be parallel to the first surface 111, and the second connecting piece 22 may extend from an end of the first connecting piece 21 to the outer side of the first connecting piece 21 along a direction parallel to the first surface.

In this embodiment, configuring the electrical connecting member 20 as a sheet-shaped body not only enables easy production and manufacture as well as good electrical conductivity and thermal conductivity, but also facilitates connection between the heat transfer member and the second connecting piece 22.

According to an embodiment of the present disclosure, the battery pack further includes: a mounting seat 40 arranged on a side of the second connecting piece 22 away from the terminal posts 12 to define the position of at least a part of the heat transfer member relative to the electrical connecting member 20. The mounting seat 40 is in thermally conductive connection with each of the second connecting piece 22 and at least the part of the heat transfer member.

Specifically, the battery pack further includes a mounting seat 40 arranged on a side of the second connecting piece 22 away from the terminal posts 12. That is, the mounting seat 40 may be mounted on the second connecting piece 22 and may be located on the second side face of the second connecting piece 22.

Specifically, the mounting seat 40 can define the position of a part of the structure of the heat transfer member relative to the electrical connecting member 20. For example, the heat transfer member is restricted at a position relative to the second connecting piece 22. The mounting seat 40 is both in thermally conductive connection with the second connecting piece 22 and in thermally conductive connection with at least the part of the heat transfer member. In this way, heat can be transferred from the electrical connecting member 20 to the heat transfer member by the mounting seat 40.

Optionally, the mounting seat 40 may be made of a thermally conductive and insulating material, such as a thermally conductive structural adhesive, a thermally conductive silicone, and a thermally conductive silicon grease, so that the heat transfer efficiency of the mounting seat 40 is improved, thereby improving the efficiency of heat transfer from the terminal posts 12 to the second surface 112.

When the portion of the heat transfer member in direct contact with the mounting seat 40 for heat transfer is a rigid structure and the electrical connecting member 20 is also made of a rigid metal, in view of the inefficient thermal conduction heat transfer between the rigid structures, the mounting seat 40 is provided between the electrical connecting member 20 and the heat transfer member for heat transfer, so that the electrical connecting member 20 and the heat transfer member are both enabled to be in sufficient contact with the mounting seat 40, thereby improving the heat transfer efficiency.

In this embodiment, the mounting seat 40 on a side of the second connecting piece 22 away from the terminal posts 12 can facilitate improving the assembly efficiency of the heat transfer member and enabling fixation of the position of the heat transfer member relative to the electrical connecting member 20.

According to an embodiment of the present disclosure, two second connecting pieces 22 are provided and are located respectively on two sides of the first connecting piece 21. Two mounting seats 40 are provided in one-to-one correspondence with the two second connecting pieces 22 respectively.

In other words, a second connecting piece 22 is provided on two sides of the first connecting piece 21 respectively. A corresponding mounting seat 40 is provided on a side of each second connecting piece 22 away from the first surface 111. The heat transfer member is also defined by each of the two mounting seats 40 to be opposite to the two second connecting pieces 22.

Taking the electrical connecting member 20 being a rectangular connecting sheet shown in FIGS. 1 to 3 as an example, the rectangular connecting sheet has a length direction and a width direction. The first connecting piece 21 may be at the middle portion of the length direction of the rectangular connecting sheet and the two second connecting pieces 22 may be at the two end portions of the length direction of the rectangular connecting sheet. The mounting seats 40 are connected to a side of the second connecting pieces 22 away from the first surface 111. At least a part of the heat transfer member is opposite to each of the two second connecting pieces 22.

In this embodiment, by providing two second connecting pieces 22 and leading out, by the two second connecting pieces 22, heat at multiple sites of the electrical connecting member 20 through the corresponding mounting seats 40 respectively and through a part of the heat transfer member, the heat dissipation area of the electrical connecting member 20 is increased and consequently the heat dissipation efficiency is improved.

According to an embodiment of the present disclosure, a clamping slot 41 is provided on a side of the mounting seat 40 away from the terminal posts 12 to mount at least a part of the heat transfer member.

Specifically, the mounting seat 40 is provided with a clamping slot 41 to mount at least a part of the structure of the heat transfer member. The first side face of the mounting seat 40 may be the side face close to the terminal posts 12. The first side face of the mounting seat 40 is in thermally conductive connection with the second connecting piece 22. The clamping slot 41 is provided on a side of the mounting seat 40 away from the terminal posts 12. That is, the clamping slot 41 may be provided on each of the side faces of the mounting seat 40 other than the first side face to mount at least a part of the heat transfer member, e.g., to have at least a part of the heat transfer member clamped into the clamping slot 41.

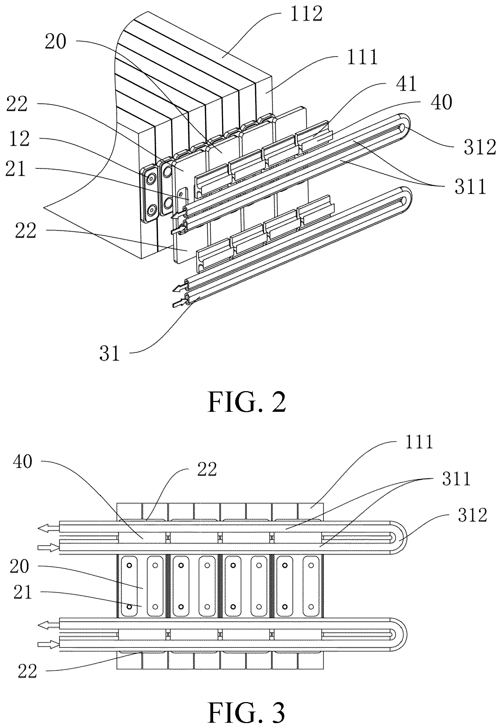

The assembly and operation principle of the mounting seat 40 is to be explained in detail with the mounting seat 40 of a cuboid-shaped structure as an example. The clamping slot 41 may be arranged on the side face of the mounting seat 40 adjacent to the first side face. For example, as shown in FIG. 2, the mounting seat 40 may generally be I-shaped. Each mounting seat 40 may be provided with two clamping slots 41. One clamping slot 41 may be opened toward a direction away from the first connecting piece 21 and the other clamping slot 41 may be opened toward a direction approaching the first connecting piece 21. Adjacent electrical connecting members 20 are sequentially spaced apart and the corresponding adjacent mounting seats 40 are sequentially spaced apart. The end portion of the clamping slot 41 on each mounting seat 40 may be in communication with the end portion of the clamping slot 41 on the adjacent mounting seat 40 to form a mounting space for mounting the heat transfer member. The multiple clamping slots 41 enable fixation and mounting of multiple positions on the heat transfer member.

The clamping slot 41 may alternatively be arranged on the side face of the mounting seat 40 opposite to the first side face, in which case the clamping slot 41 may be opened toward a direction away from the second connecting piece 22. Multiple clamping slots 41 may be provided, and the specific number thereof may be set depending on the actual heat dissipation demand.

In this embodiment, providing the clamping slot 41 on the mounting seat 40 provides the advantage of a simple structure and convenient mounting of at least a part of the structure of the heat transfer member. Also, the surface of the slot wall of the clamping slot 41 can provide a greater contact area, thereby enabling more sufficient and efficient heat transfer between the heat transfer member and the mounting seat 40.

According to an embodiment of the present disclosure, the heat transfer member includes a radiator 31 and a cooler.

Specifically, at least a part of the radiator 31 is arranged opposite to the electrical connecting member 20 and can exchange heat with the electrical connecting member 20. The radiator 31 has a first cooling channel. At least a part of the cooler is in thermally conductive connection with the second surface 112. The cooler has a second cooling channel that is in communication with the first cooling channel to transfer heat from the electrical connecting member 20 to the second surface 112.

In other words, the heat transfer member is essentially composed of a radiator 31 for exchange with the electrical connecting member 20 and a cooler in thermally conductive connection with the second surface 112. The radiator 31 has a first cooling channel and the cooler has a second cooling channel in communication with the first cooling channel. Heat from the electrical connecting member 20 can be transferred to the second surface 112 by the first cooling channel and the second cooling channel.

At least a part of the radiator 31 is arranged opposite to the electrical connecting member 20. For example, a part of the radiator 31 may be mounted on the mounting seat 40. For example, this part may be clamped into the clamping slot 41.

It is to be noted that cooling liquid may be provided in the first cooling channel and the second cooling channel. The cooling liquid circulates and flows inside the first cooling channel and the second cooling channel to continuously transport heat from the electrical connecting member 20 to the vicinity of the second surface 112 for heat dissipation.

In this embodiment, through cooperation between the radiator 31 and the cooler and by utilizing the first cooling channel and the second cooling channel in communication with each other, the heat transferred to the electrical connecting member 20 by the terminal posts 12 can be transferred efficiently to the second surface 112 for heat dissipation, thereby improving the heat dissipation efficiency and preventing damage to the battery core caused by overheating of the terminal posts 12.

Optionally, the first cooling channel and the second cooling channel may be channels in corresponding cooling pipes or cooling circuits in a liquid cooling fin. If the radiator 31 includes a structure of liquid cooling fin, the liquid cooling plate may be adhered to one side of the electrical connecting member 20 directly by a thermally conductive structural adhesive for heat transfer.

According to an embodiment of the present disclosure, the radiator 31 includes multiple straight pipes 311 and an elbow pipe 312 arranged at end portions of the straight pipes 311 to connect adjacent straight pipes 311.

Specifically, the radiator 31 may be a radiating pipe. The radiator 31 may include multiple straight pipes 311 and an elbow pipe 312 connecting end portions of adjacent straight pipes 311. For example, as shown in FIG. 2, taking the second connecting piece 22 of the electrical connecting member 20 provided with the mounting seat 40 which has the clamping slot 41 as an example, the second connecting pieces 22 on two sides of the first connecting piece 21 may correspond respectively to two straight pipes 311 and one elbow pipe 312. The two straight pipes 311 and the one elbow pipe 312 are connected into a U-like shaped pipe structure. The radiator 31 may include two U-shaped pipe structures. The straight pipes 311 may pass through the corresponding clamping slots 41. The straight pipes 311 corresponding to the two second connecting pieces 22 may be connected by additional piping, and the straight pipes 311 corresponding to the two second connecting pieces 22 are both in communication with the second cooling channel of the cooler.

In addition, the second connecting pieces 22 on the same side may correspond to three or more straight pipes 311. The multiple straight pipes 311 may be parallel to each other. The number of the elbow pipes 312 may be set in correspondence with that of the straight pipes 311. The straight pipes 311 and the elbow pipes 312 may form a serpentine-like pipe structure. In this case, multiple clamping slots 41 parallel to each other may be provided on a side of the mounting seat 40 arranged on the second connecting piece 22 away from the second connecting piece 22 to mount the corresponding straight pipes 311.

A cooling circuit can be formed by the multiple straight pipes 311 in cooperation with the elbow pipes 312 of the radiator 31 together with the cooler, to transfer heat from the electrical connecting member 20 to the second surface 112 continuously in circulation and dissipate the heat by the cooler in the vicinity of the second surface 112.

It is to be noted that the cooler may also include multiple straight pipes 311 and an elbow pipe 312 connecting the straight pipes 311. The straight pipes 311 and the elbow pipe 312 may form serpentine-shaped piping that is arranged in the vicinity of the second surface 112. By controlling the number of the straight pipes 311, the length of the entire cooling circuit can be controlled, thereby controlling the heat dissipation efficiency.

In addition, as heat may also be accumulated in the shell 11 of the battery cell 10, the cooler arranged on the second surface 112 can not only dissipate heat led-out from the terminal posts 12 and the electrical connecting member 20, but also dissipate heat from the shell 11, thereby preventing adverse impact on the battery core caused by overheating of the shell 11.

According to an embodiment of the present disclosure, the shell 11 has edges extending along a first direction, a second direction, and a third direction. The first direction and the second direction define a first plane, the first direction and the third direction define a second plane, and the second direction and the third direction define a third plane. The first surface 111 is connected to the second surface 112, the first surface 111 is parallel to the third plane, and the second surface 112 is parallel to the second plane.

Specifically, the shell 11 has at least three faces, i.e., a first plane, a second plane, and a third plane. The first plane is parallel to each of the first direction and the second direction, the second plane is parallel to each of the first direction and the third direction, and the third plane is parallel to each of the second direction and the third direction.

That is, the first surface 111 is connected to the second surface 112, the first surface 111 is parallel to the third plane, and the second surface 112 is parallel to the second plane. That is, the first surface 111 is parallel to each of the second direction and the third direction, and the second surface 112 is parallel to each of the first direction and the third direction.

The shell 11 may be a hexahedron, such as a rectangular shell, that has edges along the first direction, the second direction, and the third direction. The shell 11 may have two first planes defined by the first direction and the second direction, two second planes defined by the first direction and the third direction, and two third planes defined by the second direction and the third direction.

In this embodiment, by transferring heat from the terminal posts 12 extending out of the first surface 111 to the vicinity of the second surface 112 connected to the first surface 111, heat dissipation efficiency can be effectively improved, and the overall length of the heat dissipation piping can be reduced, thereby lowering the production cost.

Optionally, the battery pack may further include a radiating fan that may be arranged opposite to the second surface 112. The speed of heat dissipation of the second surface 112 can be increased by the radiating fan, thereby further improving the heat dissipation efficiency.

According to an embodiment of the present disclosure, the surface area of the second surface 112 is greater than that of the first surface 111. In this case, the first plane may be defined as the top face or the bottom face, the second plane may be defined as the end face, and the third plane may be defined as the side face. As in this embodiment, the surface area of the second surface 112 is greater than that of the first surface 111, i.e., the area of the end face is less than that of the side face, the first plane may be defined as the larger face and the third plane may be defined as the smaller face. As a large place on the outer surface of the shell 11 is significantly expanded, squeezing of the significantly expanded large face caused by the large-area contact between the cooler and the shell 11 can be prevented by defining the cooler to be opposite to the second surface 112 and defining the specific position of the second surface 112.

The battery pack of the present disclosure is to be described in detail below with a cuboid-shaped shell 11 as an example.

The first direction, the second direction, and the third direction are perpendicular to each other. As shown in FIG. 1, the shell 11 is an elongated flat shell 11. The first direction may be the length direction of the shell 11, the second direction may be the width direction of the shell 11, and the third direction may be the thickness direction of the shell 11 as shown in the figure.

That is, the first direction may extend along the front-rear direction, the second direction may extend along the top-bottom direction, and the third direction may extend along the left-right direction. In this case, the first surface 111 may be the right side face as shown in FIG. 1, and the second surface 112 may the upper surface or lower surface of the shell 11 as shown in FIG. 1. The terminal posts 12 are arranged on the right side face of the shell 11. The electrical connecting member 20, the mounting seat 40, and the straight pipes 311 of the radiator 31 are each opposite to the right side face of the shell 11. The cooler may be arranged on the upper surface of the shell 11.

The area of the right side face of the shell 11 is the thickness of the shell 11 multiplied by the width of the shell 11. The area of the upper surface of the shell 11 is the thickness of the shell 11 multiplied by the length of the shell 11. Therefore, the area of the right side face of the shell 11 is less than that of the upper surface of the shell 11. That is, the upper surface of the shell 11 has a greater heat dissipation area than the right side face of the shell 11 and provides a larger space for arranging the cooler. Therefore, the electrical connecting member 20 and the heat transfer member transfer heat from the terminal posts 12 to the vicinity of the second surface 112 for heat dissipation, thereby enabling improved heat dissipation efficiency.

In the description of the present disclosure, the orientation or position relationships indicated by terms such as "upper" and "lower" are based on the orientation or position relationships shown in the drawings, and are used only for ease of description of the present disclosure, rather than requiring that the present disclosure be constructed and operated in a particular orientation. Therefore, such terms should not be construed as limitation of the present disclosure.

In the description of this specification, description with reference to terms such as "an embodiment" and "another embodiment" means that the specific features, structures, materials, or characteristics described in conjunction with this embodiment is encompassed in at least one embodiment of the present disclosure. In this specification, schematic recitation of the foregoing terms are not necessarily directed to the same embodiment or example. Besides, the specific features, structures, materials, or characteristics that are described may be combined in proper manners in any one or more embodiments or examples. In addition, a person skilled in the art may integrate or combine different embodiments or examples described in the specification and features of the different embodiments or examples, provided that they are not contradictory to each other. In addition, it is to be noted that in this specification, the terms "first" and "second" are merely used for descriptive purposes and shall not to be construed as indicating or implying relative importance or implicitly specifying the number of technical features indicated.

Although the embodiments of the present disclosure have been shown and described above, it can be understood that the foregoing embodiments are exemplary and should not be understood as limitation of the present disclosure. A person of ordinary skill in the art can make changes, modifications, replacements, and variations to the foregoing embodiments within the scope of the present disclosure.

## Claims

1. A battery pack, comprising:
a plurality of battery cells (10) each comprising a shell (11), a battery core, and a plurality of terminal posts (12), an accommodating space being defined inside the shell (11), the battery core being arranged in the accommodating space, the shell (11) being at least provided with a first surface (111) and a second surface (112), the terminal posts (12) being arranged on the battery core and extending out of the shell (11) from the first surface (111);
an electrical connecting member (20) being disposed opposite to each of the two adjacent first surfaces (111) and electrically connected to each of the two adjacent terminal posts (12) so as to conduct two adjacent battery cells (10); and
a heat transfer member being configured to transfer heat from the electrical connecting member (20) to the second surface (112).

2. The battery pack according to claim 1, wherein the electrical connecting member (20) comprises:
a first connecting piece (21), wherein an orthogonal projection of the first connecting piece (21) on the first surface (111) covers the terminal posts (12); and
a second connecting piece (22), wherein the second connecting piece (22) is disposed on an outer side of the first connecting piece (21), an orthogonal projection of the second connecting piece (22) on the first surface (111) is spaced apart from the terminal posts (12), and the second connecting piece (22) is in thermally conductive connection with the heat transfer member.

3. The battery pack according to claim 1 or 2, wherein the electrical connecting member (20) is a sheet-shaped body.

4. The battery pack according to any one of claims 1-3, further comprising:
a mounting seat (40) arranged on a side of the second connecting piece (22) away from the terminal posts (12) to define a position of at least a part of the heat transfer member relative to the electrical connecting member (20), the mounting seat (40) being in thermally conductive connection with each of the second connecting piece (22) and at least the part of the heat transfer member.

5. The battery pack according to any one of claims 1-4, wherein two second connecting pieces (22) are provided and are located respectively on two sides of the first connecting piece (21), and two mounting seats (40) are provided in one-to-one correspondence with the two second connecting pieces (22).

6. The battery pack according to any one of claims 1-5, wherein a clamping slot (41) is provided on a side of the mounting seat (40) away from the terminal posts (12) to mount at least a part of the heat transfer member.

7. The battery pack according to any one of claims 1-6, wherein the heat transfer member comprises:
a radiator (31), wherein at least a part of the radiator (31) is arranged opposite to the electrical connecting member (20) and configured to exchange heat with the electrical connecting member (20), and the radiator (31) has a first cooling channel; and
a cooler, wherein at least a part of the cooler is in thermally conductive connection with the second surface (112), and the cooler has a second cooling channel, the second cooling channel being in communication with the first cooling channel to transfer heat from the electrical connecting member (20) to the second surface (112).

8. The battery pack according to any one of claims 1-7, wherein the radiator (31) comprises a plurality of straight pipes (311) and an elbow pipe (312) arranged at end portions of the straight pipes (311) to connect the adjacent straight pipes (311).

9. The battery pack according to any one of claims 1-8, wherein the shell (11) has edges extending along a first direction, a second direction, and a third direction, the first direction and the second direction define a first plane, the first direction and the third direction define a second plane, and the second direction and the third direction define a third plane; and
the first surface (111) is connected to the second surface (112), and the first surface (111) is parallel to the third plane and the second surface (112) is parallel to the second plane.

10. The battery pack according to any one of claims 1-9, wherein a surface area of the second surface (112) is greater than that of the first surface (111).
